# EUROPEAN PATENT APPLICATION

(11) **EP 4 727 166 A1**
(43) Date of publication of application: **15.04.2026**
(21) Application number: 24819606.5
(22) Date of filing: 07.06.2024
(51) Int. Cl.: H04R 3/00, G06F 3/01, G06F 3/16, H04M 19/04

(54) **ELECTRONIC DEVICE, METHOD, AND NON-TRANSITORY STORAGE MEDIUM FOR PROVIDING VIRTUAL VIBRATION SOUND**

(30) Priority: 08.06.2023 KR 20230073421; 14.07.2023 KR 20230091695
(71) Applicant: Samsung Electronics Co., Ltd., Suwon-si, Gyeonggi-do 16677 (KR)
(72) Inventor: NAM, Myoungwoo, Suwon-si Gyeonggi-do 16677 (KR); MOON, Minjeong, Suwon-si Gyeonggi-do 16677 (KR); SUNG, Youngjin, Suwon-si Gyeonggi-do 16677 (KR); SON, Dongil, Suwon-si Gyeonggi-do 16677 (KR); SON, Seoyoung, Suwon-si Gyeonggi-do 16677 (KR); YEO, Jaeyung, Suwon-si Gyeonggi-do 16677 (KR); LEE, Yonggu, Suwon-si Gyeonggi-do 16677 (KR)
(74) Representative: Gulde & Partner
(86) International application number: PCT/KR2024/007795
(87) International publication number: WO 2024/253455

(57) **Abstract**

The present document relates to an electronic device, a method, and a non-transitory storage medium for providing a virtual vibration sound. According to an embodiment, the electronic device comprising a first housing and a second housing may identify at least one of a mounted state and a gripped state of the electronic device on the basis that an event for activating vibration generated by a haptic module mounted in the first housing has been identified. According to an embodiment, the electronic device may: on the basis of at least one of the mounted state and the gripped state, identify an expected vibration level to be output from the haptic module; and on the basis of the expected vibration level, adjust a virtual vibration sound to be output from an audio module of the electronic device. Other embodiments are also possible.

## Description

### [Technical Field]

The disclosure relates to an electronic device, a method, and a non-transitory storage medium for providing a virtual vibration sound.

### [Background Art]

Electronic devices are evolving in various forms for the convenience of users, offering various services, applications, or functions. As the variety of services, applications, and functions provided by electronic devices gradually increases, larger displays are required to provide more screens, and easy portability is required.

In recent years, various types of electronic devices (e.g., foldable, flexible, rollable, or sliding-type electronic devices) have been developed in which the shape of a housing may be transformed to accommodate a larger display. Such electronic devices may secure portability while providing wider displays. The electronic devices may provide a flexible display in a foldable or bendable form depending on a change of the shape of a housing.

An electronic device having a transformable housing shape may provide a reception notification, such as a phone call or a message, by generating a vibration through a haptic module together with a specified sound source when an application is executed or a function is performed. An electronic device having a transformable housing shape has a haptic module, that generates a vibration, mounted to one side due to structural characteristics thereof. Accordingly, the vibration generated from the haptic module may be perceived differently by a user depending on the mount position of the haptic module, depending on the state in which the haptic module is mounted or gripped.

### [Detailed Description of the Invention]

### [Technical Problem]

The disclosure aims to provide an electronic device and method for providing a virtual vibration sound based on a mount state and/or a grip state so that the vibration experienced by a user may be consistently felt without changing in an electronic device having a transformable housing shape.

According to an embodiment of the disclosure, an electronic device may include a housing including a first housing and a second housing, a haptic module mounted in the first housing, an audio module, memory, and at least one processor electrically connected to the haptic module, the audio module, and the memory.

According to an embodiment, the at least one processor of the electronic device may be configured to identify at least one of a mount state or a grip state of the electronic device based on the event activating a vibration generated by the haptic module being identified.

In an embodiment, the at least one processor may be configured to identify an expected vibration level to be output from the haptic module, based on at least one of the mount state or the grip state.

According to an embodiment, the at least one processor may be configured to adjust a virtual vibration sound to be output from the audio module, based on the expected vibration level.

According to an embodiment, an operating method of an electronic device including a first housing and a second housing may include an operation of identifying at least one of a mount state or a grip state of the electronic device based on an event activating a vibration generated by a haptic module mounted in the first housing being identified.

According to an embodiment, the method may include an operation of identifying an expected vibration level to be output from the haptic module, based on at least one of the mount state or the grip state.

According to an embodiment, the method may include an operation of adjusting a virtual vibration sound to be output from an audio module of the electronic device, based on the expected vibration level.

An embodiment may provide a non-transitory recording medium storing at least one program, wherein the at least one program may include instructions that, when executed by at least one processor of an electronic device including a first housing and a second housing, cause the electronic device to perform an operation of identifying at least one of a mount state or a grip state of the electronic device based on an event activating a vibration generated by a haptic module mounted in the first housing being identified, an operation of identifying an expected vibration level to be output from the haptic module based on at least one of the mount state or the grip state, and an operation of adjusting a virtual vibration sound to be output from an audio module of the electronic device based on the expected vibration level.

### [Brief Description of Drawings]

FIG. 1 is a block view illustrating an electronic device in a network environment according to various embodiments.
FIGS. 2A, 2B, 2C, and 2D are views illustrating a structure of an electronic device according to an embodiment.
FIG. 3 is a view illustrating a structure of an electronic device according to an embodiment.
FIG. 4 is a view illustrating an example of a mount state of an electronic device in the electronic device according to an embodiment.
FIGS. 5A and 5B are views illustrating examples of adjusting a virtual vibration sound in an electronic device according to an embodiment.
FIG. 6 is a view illustrating an example of an operating method in an electronic device according to an embodiment.
FIG. 7 is a view illustrating an example of an operating method in an electronic device according to an embodiment.
FIG. 8 is a view illustrating an example of an operating method in an electronic device according to an embodiment.

In connection with a description of the drawings, like or similar reference numerals may be used for like or similar components.

### [Mode for Carrying out the Invention]

An electronic device according to various embodiments will be described with reference to attached drawings. The term "user" used in various embodiments may be referred to as a person who uses an electronic device or a device (e.g., an artificial intelligence electronic device) that uses an electronic device.

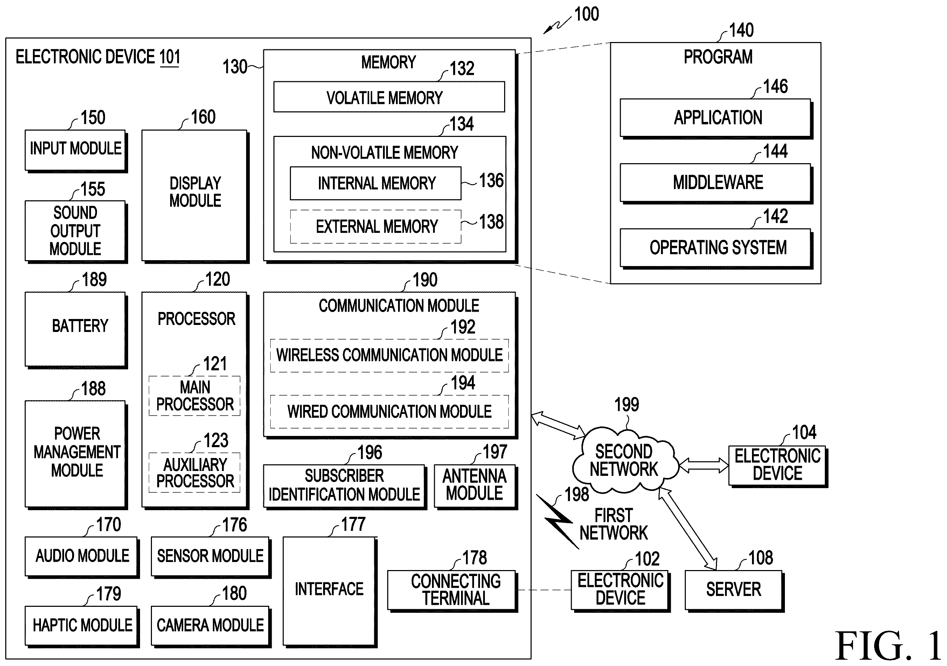

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

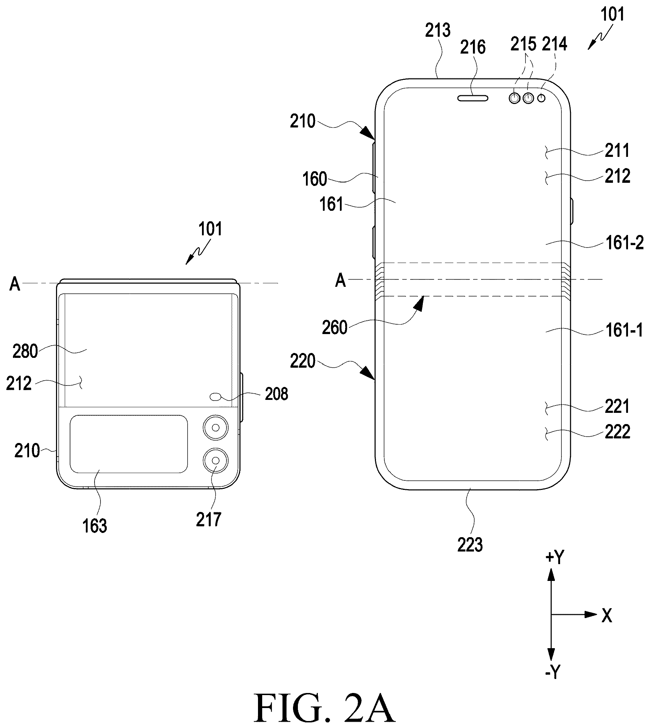

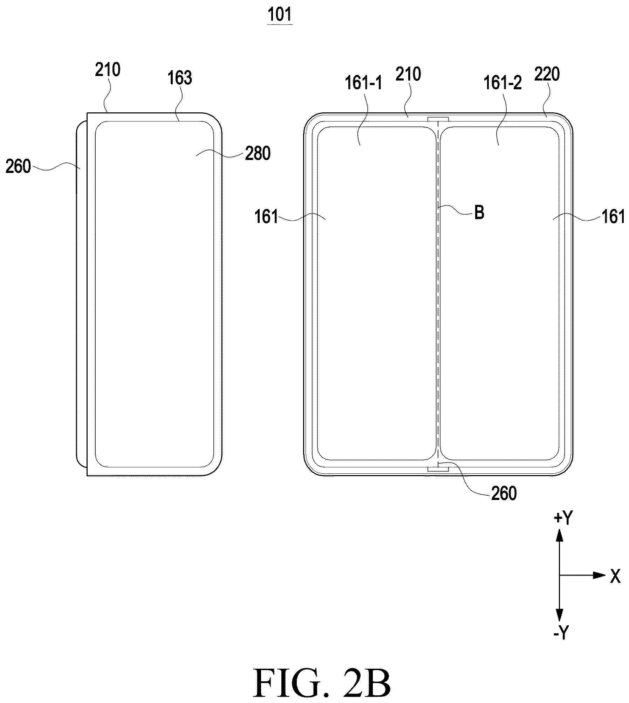

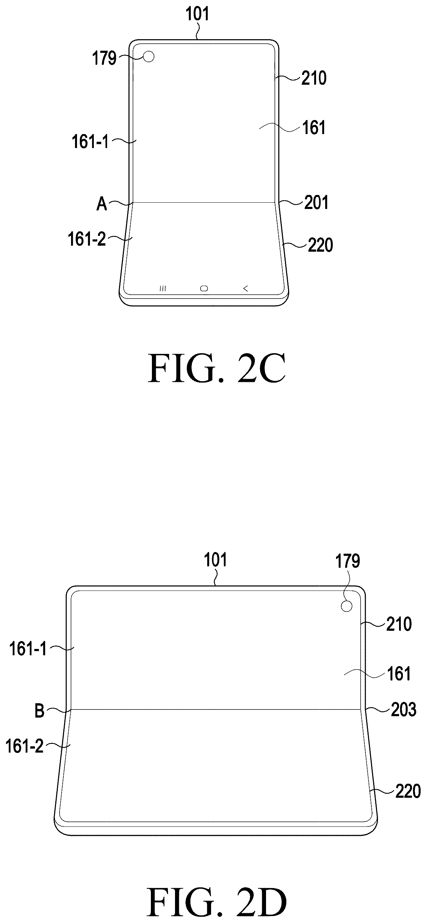

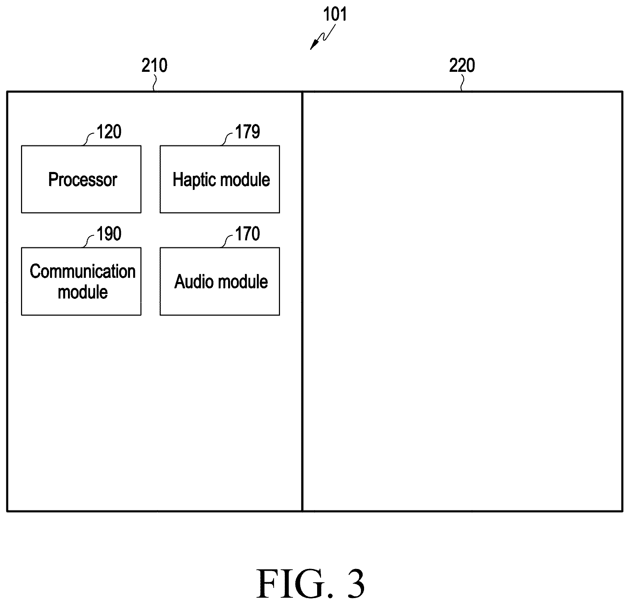

FIGS. 2A, 2B, 2C, and 2D are views illustrating a structure of an electronic device according to an embodiment, and FIG. 3 is a view illustrating a structure of an electronic device according to an embodiment.

Referring to FIGS. 1, 2A, 2B, 2C, 2D, and 3, the electronic device 101 (e.g., the electronic device 101 in FIG. 1) according to an embodiment may include a housing including a first housing structure 210 and a second housing structure 220, at least one processor 120, memory 130, a display module 160, an audio module 170, a haptic module 179, a camera module 180, and a communication module 190. In addition, the electronic device 101 may further include other components. The electronic device 101 may be configured to have the housing having a transformable shape (e.g., a foldable, flexible, rollable, or sliding shape). Although, the electronic device 101 is described, for example, that a portion of the housing of the electronic device shown in FIGS. 2A and 2C is transformed to be folded or another portion of the housing of the electronic device shown in FIGS. 2B and 2D is folded, the electronic device 101 may also be configured to have a structure in which multiple portions are folded, a portion of the housing is transformed into a rolling form or a sliding form, or without transforming of the housing.

According to an embodiment, the first housing structure 210 and the second housing structure 220 may be disposed on opposite sides (e.g., an upper side (the +Y direction) and a lower side (the -Y direction)) around a folding axis (e.g., a folding axis A in FIGS. 2A and 2C or a folding axis B in FIGS. 2B and 2D) and may be rotatably coupled to each other around the folding axis to be folded facing each other through a hinge structure 260. Without limitation thereto, according to another embodiment, the housing of the electronic device 101 may be configured by further including another housing structure other than the first housing structure 210 and the second housing structure 220 and may be configured to have a structure foldable in various shapes through multiple folding axes. According to another embodiment, the electronic device 101 may be configured such that a partial area of the housing is folded in a direction different from the folding axis.

According to an embodiment, a camera (e.g., a front camera) 214, various sensors 215, and a speaker (e.g., a receiver) 216 included in the camera module (e.g., the camera module 180 in FIG. 1) may be disposed in the first housing structure 210. For another embodiment, the camera 214, the various sensors 215, and the speaker 216 may be additionally disposed in at least a partial area of the second housing structure 220 or replaced. According to another embodiment, at least a portion of the camera 214, the various sensors 216, and the speaker 216 may be disposed in at least a partial area of the first housing 210 and the remaining of the same may be disposed in at least a partial area of the second housing structure 220. The camera 214 may be exposed through an opening provided on one corner of a front surface (e.g., a first surface 211) of the first housing 210. The sensors 215 may include at least one of a proximity sensor, a light sensor, an iris recognition sensor, an ultrasonic sensor, or an indicator. By way of example, the sensors 215 may be exposed to the front surface of the electronic device 101 through an opening provided on one corner of the first housing structure 210 or may be disposed at a lower end of at least a partial area of the display 161.

According to an embodiment, the electronic device 101 may further include a camera 217 (e.g., a rear camera) and a flash 208 exposed through an opening disposed on one corner of a second surface 212 (e.g., a rear surface) of the first housing structure 210. According to an embodiment, although not shown in the drawing, the electronic device 101 may include an ear jack hole, an external speaker module, a SIM card tray, an interface connector port, or at least one key button disposed through the first housing structure 210 and/or the second housing structure 220. According to an embodiment, the housing 200 may include a display (e.g., a rear display), a first rear cover, and a second rear cover on the second surface 212 (e.g., a rear surface) of the first housing structure 210. The housing 200 of the electronic device 101 is not limited to the shape and combination shown in FIGS. 2A, 2B, and 2C, and may be implemented by another shape or a combination and/or coupling of components. For example, in another embodiment, the first housing structure 210 and the first rear cover may be integrally configured and the second housing 220 and the second rear cover may be integrally configured.

According to an embodiment, the first housing structure 210 and the second housing structure 220 may have an angle and a distance therebetween according to an unfolded state (or flat state) (e.g., an open state), or a folded state (or close state) (e.g., a close state) of the electronic device 101. The description of the state may be replaced with a description of a mode. The unfolded state may refer to a state in which the angle between the first surface 211 of the first housing structure 210 and the first surface 221 of the second housing structure 220 is fully opened, for example, at 180 degrees, or opened in an angular range exceeding a specified angle (e.g., 115 degrees) (e.g., more than 115 degrees to 180 degrees). The unfolded state may refer to a state in which the angle between the first surface 211 of the first housing structure 210 and the first surface 221 of the second housing structure 220 is being closed to an angle range (e.g., less than 115 degrees to 0 degrees) less than a specified angle (e.g., 115 degrees) or a state in which the angle is completely closed to 0 degrees. Without limitation thereto, the folded state may be defined by an angle configured by the first surface 211 of the first housing structure 210 and the third surface 223 of the second housing structure 220. The angle may be a pre-specified angle (e.g., 135 degrees) according to an embodiment of the disclosure.

According to an embodiment, the first housing structure 210 and the second housing structure 220 may be configured such that the flexible-type display 161 included in the display module 160 is disposed on the first surface (e.g., the front surface) 211 and 221 of the housing. Without limitation thereto, the flexible-type display 161 may be disposed to extend on the second surface (e.g., the rear surface) 212 and/or the third surface (e.g., a lateral surface) 213 of the first housing structure 210, or on a second surface 222 (e.g., a rear surface) and/or a third surface 223 (e.g., a lateral surface) of the second housing structure 220. According to an embodiment, the electronic device 101 may include a display 163 (e.g., a rear display) on the second surface 212 (e.g., the rear surface) of the first housing structure 210. For example, the display 161 may be visually exposed through the front surface 211 and/or the second front surface 212 of the electronic device 101, and the rear display may be visually exposed through the rear surface 212 of the electronic device 101.

According to an embodiment, the processor 120 may perform an operation of displaying an execution screen of an application according to a state (e.g., the unfolded state and the folded state) of the electronic device 101 configured according to an angle between the first housing structure 210 and the second housing structure 220. According to an embodiment, when the electronic device 101 is in the folded state, the processor 120 may display different application execution screens in each of multiple separated areas.

According to an embodiment, the processor 120 may correspond to a hardware component (function) or a software element (program) including at least one of various components provided in the electronic device 101, such as a hardware module or a software module (e.g., an application program).

According to an embodiment, the processor 210 may include, for example, one of hardware, software, or firmware, or a combination of two or more thereof. The processor 210 may omit at least some of the components described above, or may be configured to further include other components for performing image processing operations in addition to the components described above.

According to an embodiment, the memory 130 may store various data used by at least one component (e.g., the processor 210) of the electronic device 101 and instructions for performing operations executed by the processor 210. For example, the memory 130 may store an application (function or program) having an execution screen displayed in a corresponding area of the display 161 depending on the unfolded or folded state of the electronic device 101. The memory 130 may store a program (e.g., the program 140 in FIG. 1) used for function operation and various data generated during execution of the program 140. The memory 130 may largely include a program area and a data area. The program area 140 may store program information associated with operating the electronic device 201, such as an operating system (OS) (e.g., the operating system 142 in FIG. 1) used to drive the electronic device 201. The data area may store transmitted and/or received data and generated data according to various embodiments. In addition, the memory 130 may be configured by including at least one storage medium, such as flash memory, a hard disk, a multimedia card micro-type memory (e.g., secure digital (SD) or extreme digital (XD) memory), a RAM, or a ROM. According to an embodiment, the memory 130 may store an image corresponding to an execution screen of at least one application displayed in a corresponding area of the display 161 according to the unfolded state or the folded state.

According to an embodiment, the display module 160 may include a display 161 disposed on the first surface 211 in a flexible form. According to an embodiment, the display module 160 may further include a display 163 disposed on the second surface 211 (e.g., the rear surface). The display module 160 may display execution screens of one or more applications based on the unfolded state or the folded state. According to an embodiment, when the electronic device is mounted in the folded state within a specified first angle range (e.g., 75 degrees to 115 degrees), the display module 160 may divide the display 161 into multiple regions 161-1 and 161-2 and display execution screens of different applications in each of the multiple regions 161-1 and 161-2.

According to an embodiment, the electronic device 101 may include a motion sensor and a magnetic body (e.g., a magnet) included in a sensor module (e.g., the sensor module 176 in FIG. 1). The motion sensor and the magnetic body (e.g., the magnet) may be disposed in at least a portion of the first housing structure 210 and at least a portion of the second housing structure 220. The motion sensor may be configured by a combination of at least two of an acceleration sensor, an angular velocity sensor (e.g., a gyro sensor), or a geomagnetic sensor. For example, the electronic device 101 may detect a pose, a gesture, a mount state, or a grip state of the first housing structure 210 and the second housing structure 220 through the motion sensor. For example, the pose of the first housing structure 210 and the second housing structure 220 may be detected based on the acceleration sensor of the motion sensor, and the gesture of the first housing structure 210 and the second housing structure 220 may be detected based on the angular velocity sensor of the motion sensor. For example, the mount state or the grip state of the first housing structure 210 and/or the second housing structure 220 may be detected based on the angular velocity sensor. According to an embodiment, the magnetic body may be disposed on at least a portion of the first housing structure 210 adjacent to the hinge structure 260 and at least a portion of the second housing structure 220. According to an embodiment, the electronic device 101 may detect a user's gesture or grip state through the motion sensor. According to an embodiment, the sensor module may include a proximity sensor. The proximity sensor may be used to detect an angle between the first housing structure 210 and the second housing structure 220 or to detect an angle between the first housing structure 210 or the second housing structure 220 and the floor surface.

According to an embodiment, the audio module 170 of the electronic device 101 may be mounted in the first housing structure 210, output a specified sound (e.g., a sound source, a phone ringtone, or a notification sound) according to application execution (e.g., a phone call or message reception), and, when an event activating vibration generated by the haptic module 179 is identified, output a virtual vibration sound. According to an embodiment, the audio module 170 may output a virtual vibration sound adjusted (or changed) by the processor 120 based on at least one of a mount state or a grip state of the electronic device 101. According to an embodiment, when an event activating vibration is identified, the audio module 170 may output the adjusted virtual vibration sound together with the vibration generated by the haptic module 179 and a specified sound (e.g., a phone ringtone or a notification sound) according to application execution (e.g., a phone call or message reception).

According to an embodiment, the haptic module 179 (e.g., a vibration module) of the electronic device 101 may be mounted in the first housing structure 210 and may include a horizontal vibration motor. Here, the horizontal vibration motor may generate a vibration inversely proportional to a cross-sectional area of a housing in contact with the floor surface. According to an embodiment, the haptic module 179 may generate a vibration based on an angle between the first housing structure 210 and the floor surface when the electronic device 101 is in a folding state, in which the first housing structure 210 is floated and the second housing structure is in a mounted state in contact with the floor surface. The haptic module 179 may generate a vibration (e.g., vibration intensity) that increases in response to an increase in the angle between the first housing structure 210 and the floor surface to a specified angle (90 degrees). For example, when the first housing structure 210 is floated at a specified angle (e.g., 90 degrees), the vibration may be generated at a maximum level (e.g., maximum vibration intensity).

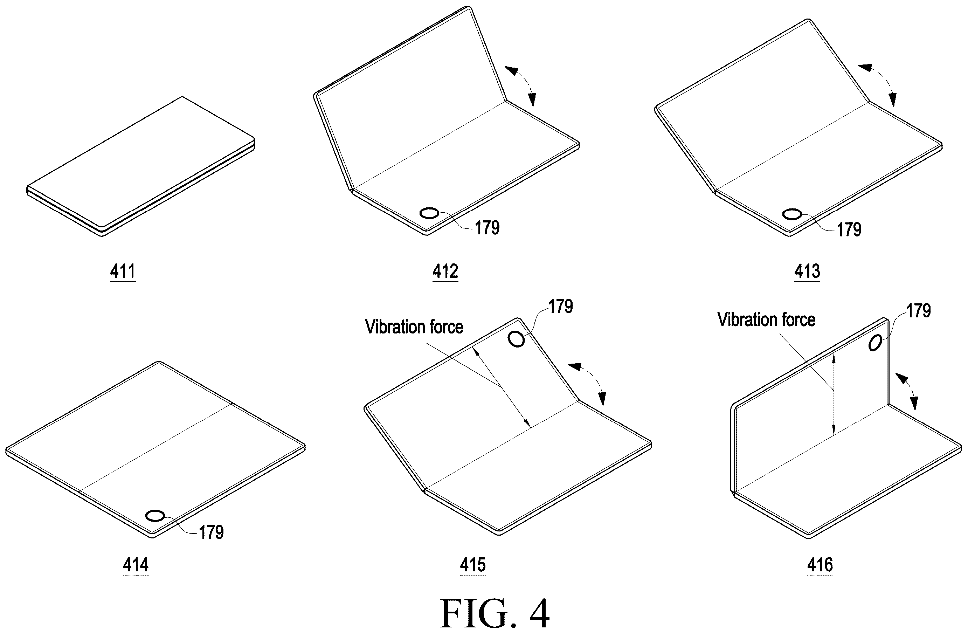

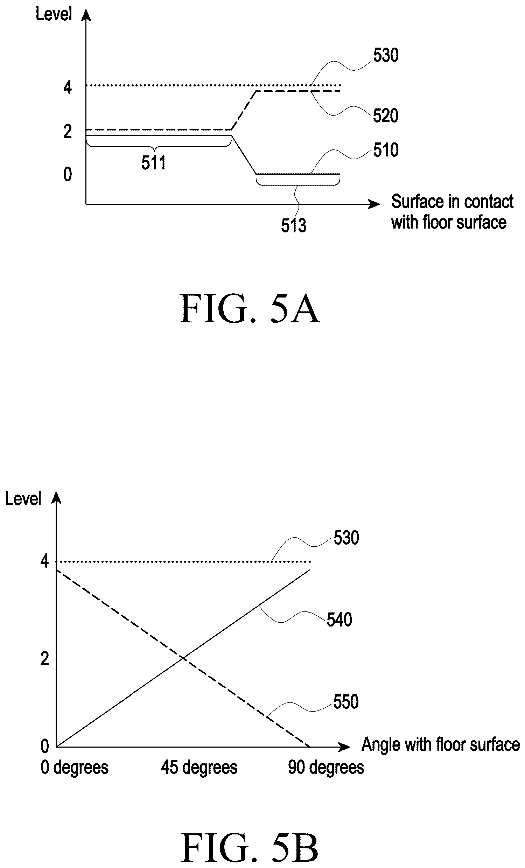

FIG. 4 is a view illustrating an example of a mount state of an electronic device in the electronic device according to an embodiment, and FIGS. 5A and 5B are views illustrating examples of adjusting a virtual vibration sound in an electronic device according to an embodiment.

Referring to FIGS. 1 to 5B, according to an embodiment, the processor 120 of the electronic device 101 may identify at least one of a mount state or a grip state of the electronic device 101 based on identifying an event activating a vibration (e.g., a haptic) generated by the haptic module 179 (e.g., a vibration module). According to an embodiment, the processor 120 may identify an expected vibration level 510 to be output from the haptic module 179, based on at least one of the identified mount state or grip state. The processor 120 may configure a horizontal vibration motor (e.g., a horizontal haptic motor or an X-axis linear motor) included in the haptic module 179 to generate a vibration with different intensities for each of mount shapes of the mount state. Based on the vibration being generated with different intensities for each of the mount shapes, the processor 120 may identify the expected vibration level 510 that is configured differently for each of the mount shapes of the mount state. For example, the horizontal vibration motor may generate a vibration inversely proportional to a cross-sectional area of a housing in contact with the floor surface. For example, the horizontal vibration motor may generate vibrations with different intensities depending on an angle between the floor surface and the housing (e.g., the first housing).

According to an embodiment, the processor 120 may adjust the virtual vibration sound to be output based on the expected vibration level for the identified mount state and/or the identified grip state. According to an embodiment, the processor 120 may identify a level 520 of the virtual vibration sound by subtracting the identified expected vibration level 510 from a specified haptic vibration level 530 so that the user may uniformly perceive the vibration during an event situation, and may adjust the virtual vibration sound to be output from the audio module 170 to the identified virtual vibration sound level 520. Here, the level may indicate a vibration intensity (e.g., vibration size) in a range specified by the user or according to the type of the event or a specified vibration intensity (e.g., vibration size). The specified haptic vibration level 530 may be a level (e.g., size or intensity) obtained by combining the identified expected vibration level and a level corresponding to the adjusted virtual vibration sound. The specified haptic vibration level may be configured to a vibration level (e.g., level 4 in FIG. 5A or the maximum vibration level) of the haptic module 179 output in the mount state (e.g., a mount state of a sixth mount shape 416 in FIG. 4) in which the second housing 220 is in contact with the floor surface and the first housing 210 is floated at a specified angle (e.g., 90 degrees).

According to an embodiment, in the case of a mount state (e.g., a first mount shape 411, a second mount shape 412, and a third mount shape 413 in FIG. 4) in which the first housing 210 in which the haptic module 179 is mounted is in contact with the floor surface (one-sided contact 511) and the second housing 220 in which the haptic module 179 is not mounted is floated, the processor 120 may identify that an expected vibration level 510 to be output from the haptic module 179 is an intermediate level (e.g., level 2 in FIG. 5A), and may adjust a level 520 of a virtual vibration sound to a specified second level (e.g., level 2 in FIG. 5A) based on the identified intermediate level. The second level may be specified as an intermediate level (e.g., level 2 in FIG. 5A) which is an identified level by subtracting the intermediate level (e.g., level 2 in FIG. 5A) which is the identified expected vibration level 510 from the specified haptic vibration level 530 (e.g., level 4 in FIG. 5A).

According to an embodiment, in the case of a mount state (e.g., a fourth mount shape 414 in FIG. 4) in which the first housing 210 in which the haptic module 179 is mounted and the second housing 220 in which the haptic module 179 is not mounted are in contact with the floor surface (two-sided contact 513), the processor 120 may adjust the virtual vibration sound level 520 to a specified first level (e.g., level 4 in FIG. 5A). The first level may be specified as a maximum level (e.g., level 4 in FIG. 5A) based on the expected vibration level 510 to be output from the haptic module 179 being a minimum level (e.g., level 0 in FIG. 5A). For example, the first level may be specified as a level identified by subtracting the intermediate level (e.g., level 2) corresponding to the identified expected vibration level from the specified haptic vibration level (e.g., level 4).

According to an embodiment, in the case of a mount state (e.g., a fifth mount shape 415 and a sixth mount shape 416 in FIG. 4) in which the second housing 220 in which the haptic module 179 is not mounted is in contact with the floor surface (one-sided contact) and the first housing 210 in which the haptic module 179 is mounted is floated, the processor 120 may identify an angle between the floor surface and the first housing 510 and adjust the virtual vibration sound based on the identified angle. According to an embodiment, when the housing is folded from the unfolded state (e.g., the fourth mount state 414 in FIG. 4) to the mount state in which the first housing 210 is floated, the processor 120 may decrease, in response to an increase from an angle (e.g., 0 degrees) in the unfolded state to a specified angle (e.g., 90 degrees), a level 550 (e.g., intensity or size of the sound) of the virtual vibration sound from a specified first level (e.g., level 4 in FIG. 5B) to a specified third level (e.g., level 0 in FIG. 5B). The third level may be specified as a minimum level (e.g., level 0 in FIG. 5B) based on the expected vibration level 540 being a maximum level (e.g., level 4 in FIG. 5B).

According to an embodiment, the processor 120 may adjust the virtual vibration sound level 550 to a specified first level (e.g., level 4 in FIG. 5B), based on identifying the identified angle as 0 degrees.

According to an embodiment, in the case of a mount state (e.g., the sixth mount shape 416 in FIG. 4) in which the second housing 220 is in contact with the floor surface (one-sided contact) and the first housing 210 is floated at a reference angle, the processor 120 may adjust the virtual vibration sound level 550 to a third level (e.g., level 0 in FIG. 5B) or may not generate the virtual vibration sound.

According to an embodiment, in the case of a mount state (e.g., the fifth mount shape 415 in FIG. 4) in which the second housing 220 is in contact with the floor surface (one-sided contact) and the first housing 210 is floated at an angle (e.g., 45 degrees) smaller than the reference angle, the processor 120 may adjust the virtual vibration sound level 550 to a second level (e.g., level 2 in FIG. 5B).

According to an embodiment, the processor 120 may obtain grip information related to the grip state of the electronic device 101 and adjust a virtual vibration sound, based on the obtained grip information so that the user consistently experiences vibration. The processor 120 may identify an expected vibration level to be output from the haptic module 179 when the electronic device 101 is in a grip state and may identify an expected haptic vibration level for each grip position as the user experiences vibration differently for each grip position.

According to an embodiment, the processor 120 may identify, based on identifying of a first grip state in which the user grips the first housing 210 in which the haptic module 179 is mounted, a grip position of the first grip state as a grip position at which the user may perceive high vibration, and identify an expected haptic vibration level as a maximum level (e.g., a level equal to or similar to the expected vibration level to be output from the haptic module 179). The processor 120 may adjust a virtual vibration sound level to a specified minimum level based on the expected haptic vibration level being a maximum level (e.g., a specified haptic vibration level).

According to an embodiment, the processor 120 may identify, based on identifying of a second grip state in which the user grips the second housing 220 in which the haptic module 179 is not mounted, a grip position of the second grip state as a grip position at which the user may perceive low vibration, and identify an expected haptic vibration level as an intermediate level (e.g., a level greater than the minimum level and lower than the expected vibration level to be output from the haptic module 179). The processor 120 may adjust a virtual vibration sound level to a specified intermediate level based on the expected haptic vibration level being the intermediate level. The intermediate level may correspond to a specified haptic vibration level and may be specified as a level obtained by subtracting the expected haptic vibration level from a haptic vibration level (or the expected vibration level to be output from the haptic module 179) specified to provide a vibration evenly.

According to an embodiment, the processor 120 may identify, using at least one sensor, that the electronic device 101 is not in the mount state or the grip state (e.g., located in a bag or pocket), and in this case, may adjust a virtual vibration sound to the specified maximum level. When the electronic device is not in the mount state or the grip state, even if the haptic module 179 generates vibration at the same vibration level, the user's haptic vibration is lowered, and thus the processor 120 may identify an expected haptic vibration level as the minimum level, and adjust the virtual vibration sound to the specified maximum level based on the expected haptic vibration level being the minimum level so as to provide a vibration evenly at the specified haptic vibration level.

According to an embodiment, the processor 120 may obtain surrounding environment information, identify external noise based on the surrounding environment information, and in case that the surrounding environment is noisy and the external noise is greater than a first reference level, adjust an adjusted virtual vibration sound level to increase to a predetermined level. According to an embodiment, in case that the surrounding environment is quiet and the external noise is lower than a second reference level, the processor 120 may adjust the adjusted virtual vibration sound level to decrease to a predetermined level.

According to an embodiment, the processor 120 may obtain a distance between the electronic device 101 and the user, for example, by using a short-range communication method, and when the distance between the electronic device 101 and the user is greater than a reference distance and the electronic device is in the mount state, may adjust the adjusted virtual vibration sound level to increase to a preconfigured level. For example, the processor 120 may adjust the virtual vibration sound, based on the distance between the electronic device 101 and an external electronic device obtained through short-range communication with the external electronic device (e.g., a wearable device worn by the user) of the user. For example, the processor 120 may monitor the surroundings of the electronic device 101 by using at least one sensor (e.g., a LiDAR sensor, a radar sensor, or a proximity sensor) and/or a camera of the electronic device 101 to identify whether the user is in a close location, and may adjust the virtual vibration sound, based on whether the user is in a close location. For example, the processor 120 may identify whether the user is in a close location to the mounted electronic device 101 through voice recognition of the user. Without limitation thereto, the processor 120 may identify the distance between the mounted electronic device 101 and the user or the proximity of the user through various other methods.

According to an embodiment, the processor 120 may control the audio module 170 to output the adjusted virtual vibration sound. The processor 120 may control the audio module 170 to output the adjusted virtual vibration sound together with or separately from a specified sound (e.g., a phone ringtone or a notification sound) for an event that activates vibration. According to an embodiment, the processor 120 may control the haptic module 179 to generate a vibration at an expected vibration level concurrently with the output of the adjusted virtual vibration sound. The processor 120 may output the virtual vibration sound at an intensity (e.g., size or volume) of a sound corresponding to the virtual vibration sound level adjusted to the identified virtual vibration sound level 520.

According to an embodiment, the electronic device 101 may provide a haptic vibration to the user evenly (or consistently) during an event situation by providing a haptic vibration obtained by combining an adjusted virtual vibration sound output from the audio module 170 and a vibration output from the haptic module 179.

The electronic device 101 according to an embodiment may implement a software module (e.g., the program 140 in FIG. 1) for adjusting a virtual vibration sound to consistently provide the haptic vibration level to the user. The memory 130 of the electronic device 101 may store commands (e.g., instructions) for realizing the software module shown in FIG. 2. The at least one processor 120 may execute the instructions stored in the memory 130 to realize the software module and control hardware (e.g., the sensor module 176, the audio module 170, the haptic module 179, or the communication module 190 in FIG. 1) related to functions of the software module 201. According to an embodiment, the software module of the electronic device 101 may be configured by including a kernel (or HAL), a framework (e.g., the middleware 144 in FIG. 1), and an application (e.g., the application 146 in FIG. 1). At least a portion of the software module may be preloaded on the electronic device 101 or downloadable from a server (e.g., the server 108).

As such, in the embodiment above, the main components of the electronic device have been explained through the electronic device 101 in FIGS. 1, 2A to 2D, and 3. However, in various embodiments, not all of the components illustrated through FIGS. 1, 2A to 2D, and 3 are essential components, and the electronic device 101 may be implemented with more components than the illustrated components, or the electronic device 101 may be implemented with fewer components. Furthermore, the positions of the main components of the electronic device 101 described through the FIGS. 1, 2A to 2D, and 3 may vary according to various embodiments.

According to an embodiment, an electronic device (e.g., the electronic device 101 in FIGS. 1, 2A to 2D, and 3) may include a housing including a first housing (e.g., the first housing 210 in FIGS. 1, 2A to 2D, and 3) and a second housing (e.g., the second housing 220 in FIGS. 1, 2A to 2D, and 3), a haptic module (e.g., the haptic module 179 in FIGS. 1 and 3) mounted in the first housing, an audio module (e.g., the audio module 170 in FIGS. 1 and 3), memory (e.g., the memory 130 in FIG. 1), and at least one processor (e.g., the processor 120 in FIGS. 1 and 3) electrically connected to the haptic module, the audio module, and the memory.

According to an embodiment, the at least one processor of the electronic device may be configured to identify at least one of a mount state or a grip state of the electronic device based on the event activating a vibration generated by the haptic module being identified.

In an embodiment, the at least one processor may be configured to identify an expected vibration level to be output from the haptic module, based on at least one of the mount state or the grip state.

According to an embodiment, the at least one processor may be configured to adjust a virtual vibration sound to be output from the audio module, based on the expected vibration level.

According to an embodiment, the at least one processor may be configured to control the audio module to output the adjusted virtual vibration sound and control the haptic module to output a vibration corresponding to the expected vibration level concurrently with the output of the adjusted virtual vibration sound.

According to an embodiment, the at least one processor may be configured to adjust the virtual vibration sound to a level obtained by subtracting the expected vibration level from the specified haptic vibration level, so as to provide a consistent haptic vibration at a specified haptic vibration level in the event situation.

According to an embodiment, the haptic module may include a horizontal vibration motor (e.g., a horizontal haptic motor or an X-axis linear motor), and the horizontal vibration motor may generate a vibration inversely proportional to a cross-sectional area of the housing in contact with the floor surface.

According to an embodiment, the specified haptic vibration level may be configured as a maximum vibration level output from the haptic module or a vibration level output from the haptic module in the mount state in which the second housing is in contact with the floor surface and the first housing is rotated and floated at a specified angle based on the hinge structure, and the hinge structure may be configured between the first housing and the second housing.

According to an embodiment, the at least one processor may be configured to adjust the virtual vibration sound to a specified first level, based on the mount state corresponding to a state in which the first housing and the second housing are in contact with the floor surface. According to an embodiment, the specified first level may be configured as a maximum level, based on the expected vibration level to be output from the haptic module being a minimum level.

According to an embodiment, the at least one processor may be configured to adjust the virtual vibration sound to a specified second level, based on the mount state corresponding to a state in which the first housing is in contact with the floor surface and the second housing is floated. According to an embodiment, the specified second level may be configured as a specified intermediate level between a first level corresponding to the maximum level and a third level corresponding to the minimum level, based on the expected vibration level being the intermediate level.

According to an embodiment, the at least one processor may be configured to identify an angle between the floor surface and the first housing based on the mount state corresponding to a state in which the first housing is floated and the second housing is in contact with the floor surface, and to adjust the virtual vibration sound based on the identified angle.

According to an embodiment, the at least one processor may be configured to reduce the intensity of the virtual vibration sound to a specified third level in response to the identified angle increasing to a specified angle. According to an embodiment, the third level may be configured as the minimum level based on the expected vibration level being the maximum level.

According to an embodiment, the at least one processor may be configured to adjust the virtual vibration sound to a specified first level based on identifying of the identified angle as 0 degrees, and to adjust the virtual vibration sound to a third level or not to output the virtual vibration sound based on identifying of the identified angle as the reference angle.

According to an embodiment, the at least one processor may be configured to adjust the virtual vibration sound to the specified minimum level based on the grip state corresponding to a state in which the first housing is gripped, identify an expected haptic level being lowered based on the grip state corresponding to a state in which the second housing is gripped, adjust the virtual vibration sound to the intermediate level greater than the minimum level and lower than the maximum level based on the expected haptic level, and adjust the virtual vibration sound to the specified maximum level based on the electronic device not in the mount state or the grip state.

According to an embodiment, the intermediate level may be a level obtained by subtracting the expected haptic level from the specified haptic vibration level so as to provide a vibration uniformly at the specified haptic vibration level.

According to an embodiment, the specified haptic vibration level may be specified as the maximum vibration level output from the haptic module.

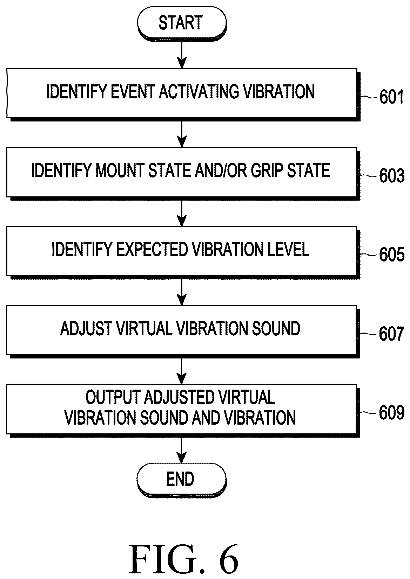

FIG. 6 is a view illustrating an example of an operating method in an electronic device according to an embodiment.

Referring to FIG. 6, in operation 601, the electronic device (e.g., the electronic device 101 in FIGS. 1, 2A to 2D, and 3) according to an embodiment may identify an event that activates a vibration generated by a haptic module (e.g., the haptic module 179 or the vibration module in FIGS. 1 and 3). The event that activates the vibration may be an event that outputs a vibration generated by the haptic module together with a specified sound source (e.g., a phone ringtone or a notification sound) or outputs only the vibration.

In operation 603, the electronic device may identify at least one of a mount state or a grip state. The mount state may indicate a state in which the first housing and the second housing of the electronic device are in a folded or unfolded state, and one side of the first housing (e.g., the first housing 210 in FIGS. 2A to 2D and 3) and/or one side of the second housing (e.g., the second housing 220 of FIGS. 2A to 2D and 3) is in contact with a floor surface. The grip state may indicate a state in which a user grips a portion (e.g., the first housing or the second housing) of a housing of the electronic device.

In operation 605, the electronic device may identify an expected vibration level to be output from a haptic module based on at least one of the mount state or the grip state. The electronic device may identify the expected vibration level for each mount shape based on a horizontal vibration motor (e.g., a horizontal haptic motor or an X-axis linear motor) included in the haptic module generating vibration with different intensities for each mount shape in the mount state. For example, the horizontal vibration motor may generate a vibration inversely proportional to a cross-sectional area of a housing in contact with the floor surface. For example, the horizontal vibration motor may generate vibrations with different intensities depending on an angle between the floor surface and the housing (e.g., the first housing).

In operation 607, the electronic device may adjust a virtual vibration sound to be output from an audio module (e.g., the audio module 170 in FIGS. 1 and 3) based on the expected vibration level. According to an embodiment, the electronic device may identify a virtual vibration sound level by subtracting the identified expected vibration level from a specified haptic vibration level so that the user may uniformly perceive the vibration during a event situation, and may adjust the virtual vibration sound to be output from the audio module to the identified virtual vibration sound. Here, the level may indicate a vibration intensity (e.g., vibration size) in a range specified by the user or according to the type of the event or a specified vibration intensity (e.g., vibration size). The specified haptic vibration level may be a level (e.g., size or intensity) obtained by combining the identified expected vibration level and a level corresponding to the adjusted virtual vibration sound. The specified haptic vibration level may be configured as a vibration level (e.g., level 4 in FIG. 5A or the maximum vibration level) of the haptic module output in the mount state (e.g., the sixth mount shape 416 of the mount state in FIG. 4) in which the second housing is in contact with the floor surface and the first housing is floated at a specified angle (e.g., 90 degrees) or the maximum vibration level of the haptic module.

In operation 609, the electronic device may output the virtual vibration sound adjusted to cause the user to consistently perceive vibration (at a specified haptic vibration level) during an event situation through the audio module, and output a vibration corresponding to the expected vibration level through the haptic module concurrently with the output of the adjusted virtual vibration sound.

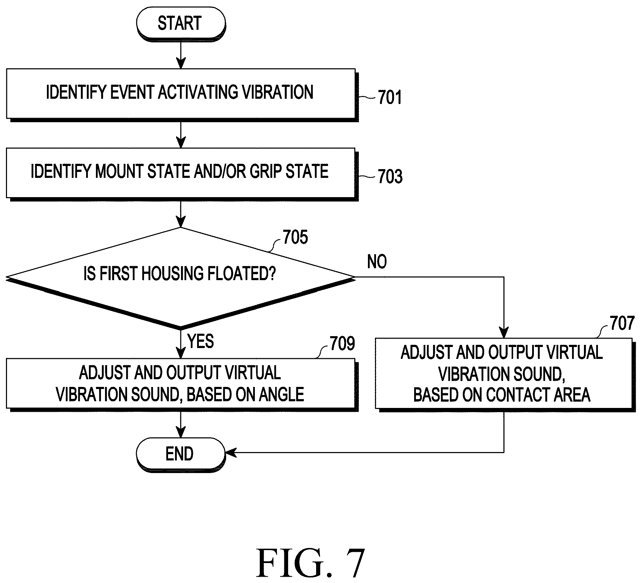

FIG. 7 is a view illustrating an example of an operating method in an electronic device according to an embodiment.

Referring to FIG. 7, in operation 701, the electronic device (e.g., the electronic device 101 in FIGS. 1, 2A to 2D, and 3) according to an embodiment may identify an event that activates a vibration generated by a haptic module (e.g., the haptic module 179 or the vibration module in FIGS. 1 and 3). The event that activates the vibration may be an event that outputs a vibration generated by the haptic module together with a specified sound source (e.g., a phone ringtone or a notification sound) or outputs only the vibration.

In operation 703, the electronic device may identify a mount state. The mount state may indicate a state in which the first housing and the second housing of the electronic device are in a folded or unfolded state, and one side of the first housing (e.g., the first housing 210 in 2A to 2D and 3) and/or one side of the second housing (e.g., the second housing 220 of 2A to 2D and 3) is in contact with a floor surface.

In operation 705, the electronic device may identify whether the mount state corresponds to a shape in which the first housing is being floated. As a result of the identification, in case that the mount state does not correspond to the shape in which the first housing is being floated, the electronic device may perform operation 707, and in case that the mount state corresponds to the shape in which the first housing is being floated, the electronic device may perform operation 709.

In operation 707 (operation 705-No), the electronic device may identify that the first housing is in contact with the floor surface, and may adjust a virtual vibration sound based on a contact area of the housing in contact with the floor surface. The electronic device may output the virtual vibration sound adjusted to cause the user to consistently perceive vibration (e.g., a specified haptic vibration level) during an event situation through the audio module, and output a vibration corresponding to the expected vibration level through the haptic module concurrently with the output of the adjusted virtual vibration sound.

In operation 709 (operation 705-Yes), the electronic device may identify that the first housing is floating, and may identify an angle between the floor surface and the first housing. The electronic device may adjust the virtual vibration sound based on the identified angle. The electronic device may output the virtual vibration sound adjusted to cause the user to consistently perceive vibration (e.g., a specified haptic vibration level) during an event situation through the audio module, and output a vibration corresponding to the expected vibration level through the haptic module concurrently with the output of the adjusted virtual vibration sound.

In operation 707 in FIG. 7 described above, in the case of a mount state (e.g., the first mount shape 411, the second mount shape 412, and the third mount shape 413 in FIG. 4) in which the first housing having the haptic module mounted therein is in contact with the floor surface (e.g., one-sided contact) and the second housing having no haptic module mounted therein is floated, the electronic device according to an embodiment may identify an expected vibration level to be output from the haptic module is an intermediate level (e.g., level 2 of the expected vibration level 510 in FIG. 5A) and adjust a virtual vibration sound level (e.g., the virtual vibration sound level 520 in FIG. 5A) to a specified second level (e.g., level 2 in FIG. 5A) based on the identified intermediate level. The second level may be specified as an intermediate level which is an identified level (e.g., level 2 of the virtual vibration sound level 520 in FIG. 5A) by subtracting the intermediate level (e.g., level 2 of the predicted vibration level 510 in FIG. 5A) corresponding to the identified expected vibration level from the specified haptic vibration level (e.g., level 4 of the specified haptic vibration level 530 in FIG. 5A).

In operation 707 in FIG. 7 described above, in the case of a mount state (e.g., the fourth mount shape 414 in FIG. 4) in which the first housing having the haptic module mounted therein and the second housing having no haptic module therein are in contact with the floor surface (two-sided contact), the electronic device according to an embodiment may adjust the virtual vibration sound level (e.g., the virtual vibration sound level 520 in FIG. 5A) to a specified first level (e.g., level 4 in FIG. 5A). The first level may be specified as a maximum level (e.g., level 4 of the virtual vibration sound level 520 in FIG. 5A) based on the expected vibration level to be output from the haptic module being a minimum level (e.g., level 0 of the predicted vibration level 510 in FIG. 5A). For example, the first level may be specified as a level identified by subtracting the intermediate level (e.g., level 2) corresponding to the identified expected vibration level from the specified haptic vibration level (e.g., level 4 of the specified haptic vibration level 530 in FIG. 5A).

In operation 709 in FIG. 7 described above, in the case of a mount state (e.g., the fifth mount shape 415 and the sixth mount shape 416 in FIG. 4) in which the second housing having no haptic module mounted therein is in contact with the floor surface (one-sided contact) and the first housing having the haptic module mounted therein is floated, the electronic device according to an embodiment may identify an angle between the floor surface and the first housing and adjust the virtual vibration sound based on the identified angle. According to an embodiment, when the housing is folded from the unfolded state (e.g., the fourth mount state 414 in FIG. 4) to the mount state in which the first housing is floated, the electronic device may decrease, in response to an increase from an angle (e.g., 0 degrees) in the unfolded state to a specified angle (e.g., 90 degrees), the virtual vibration sound level 550 (e.g., intensity or size of the sound) from a specified first level (e.g., level 4 of the virtual vibration sound level 550 in FIG. 5B) to a specified third level (e.g., level 0 of the virtual vibration sound level 550 in FIG. 5B). The third level may be specified as a minimum level (e.g., level 0 of the virtual vibration sound level 550 in FIG. 5B), based on the expected vibration level being a maximum level (e.g., level 4 of the predicted vibration level 540 in FIG. 5B).

According to an embodiment, the electronic device may adjust the virtual vibration sound level 550 to a specified first level (e.g., level 4 of the virtual vibration sound level 550 in FIG. 5B) based on identifying the identified angle as 0 degrees. According to an embodiment, in the case of a mount state (e.g., the sixth mount shape 416 in FIG. 4) in which the first housing is floated at a reference angle, the electronic device may adjust the virtual vibration sound level to a third level (e.g., level 0 of the virtual vibration sound level 550 in FIG. 5B) or may not generate the virtual vibration sound.

According to an embodiment, in the case of a mount state (e.g., the fifth mount shape 415 in FIG. 4) in which the second housing 220 is in contact with the floor surface (one-sided contact) and the first housing 210 is floated at an angle (e.g., 45 degrees) smaller than the reference angle, the electronic device may adjust the virtual vibration sound level to a second level (e.g., level 2 of the virtual vibration sound level 550 in FIG. 5B).

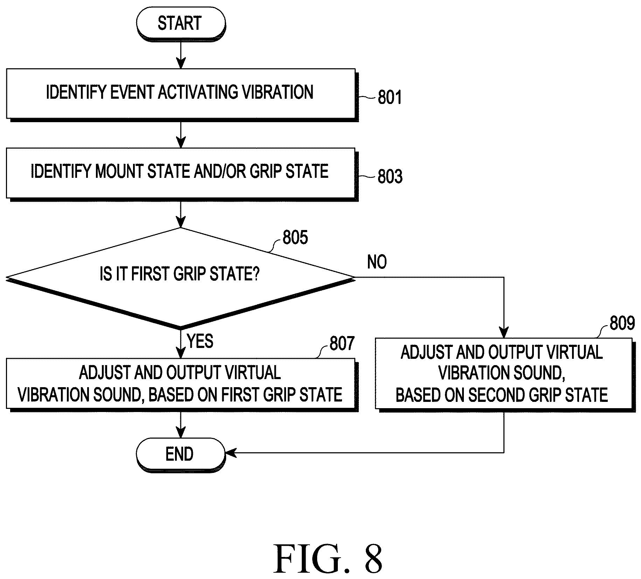

FIG. 8 is a view illustrating an example of an operating method in an electronic device according to an embodiment.

Referring to FIG. 8, in operation 801, the electronic device (e.g., the electronic device 101 in FIGS. 1, 2A to 2D, and 3) according to an embodiment may identify an event that activates a vibration generated by a haptic module (e.g., the haptic module 179 or the vibration module in FIGS. 1 and 3). The event that activates the vibration may be an event that outputs a vibration generated by the haptic module together with a specified sound source (e.g., a phone ringtone or a notification sound) or outputs only the vibration.

In operation 803, the electronic device may identify a grip state. The grip state may indicate a state in which a user grips a portion (e.g., the first housing or the second housing) of a housing of the electronic device. The electronic device may obtain grip information related to the grip state and identify the grip state based on the obtained grip information so that the user may consistently perceive the vibration. When in the grip state, the electronic device may identify an expected vibration level to be output from the haptic module and identify an expected haptic vibration level for each grip position as the user experiences vibration differently for each grip position. For example, when the operating method of FIG. 8 is performed based only on the grip state and not based on the mount state, the vibration output from the haptic module may be the same, and in this case, the expected vibration level to be output from the haptic module may be identified as the same. For example, when in a state (e.g., the folding state) in which the second housing is gripped and the first housing having the haptic module mounted therein is rotated and floated based on the hinge structure, the electronic device may identify that the electronic device is mounted on the hand in a mount shape such as the fifth mount state 415 in FIG. 4 and the mount state 416 in FIG. 6. In this case, the expected vibration level to be output from the haptic module may be identified differently depending on the mount shape.

In operation 805, the electronic device may identify whether it is a first grip state in which the first housing is gripped. As a result of the identification, in case that it is the first grip state, the electronic device may perform operation 807 and when it is not the first grip state, the electronic device may perform operation 709.

In operation 807 (operation 805-Yes), the electronic device may adjust the virtual vibration sound based on the first grip state in which the first housing is gripped. According to an embodiment, the electronic device may identify a grip position of the first grip state as a grip position at which the user may perceive high vibration, and identify an expected haptic vibration level as a maximum level (e.g., a level equal to or similar to the expected vibration level to be output from the haptic module). The electronic device may adjust a virtual vibration sound level to a specified minimum level based on the expected haptic vibration level being a maximum level (e.g., a specified haptic vibration level). The electronic device may output the virtual vibration sound adjusted to cause the user to consistently perceive vibration (a specified haptic vibration level) during an event situation through the audio module, and output a vibration corresponding to the expected vibration level through the haptic module concurrently with the output of the adjusted virtual vibration sound.

In operation 809 (operation 805-No), the electronic device may adjust the virtual vibration sound based on a second grip state other than the first grip state in which the first housing is gripped. According to an embodiment, the processor 120 may identify, based on identifying of a second grip state in which the user grips the second housing 220 in which the haptic module 179 is not mounted, a grip position of the second grip state as a grip position at which the user may perceive low vibration, and identify an expected haptic vibration level as an intermediate level (e.g., a level greater than the minimum level and lower than the expected vibration level to be output from the haptic module 179). The processor 120 may adjust a virtual vibration sound level to a specified intermediate level based on the expected haptic vibration level being the intermediate level. The intermediate level may correspond to a specified haptic vibration level and may be specified as a level obtained by subtracting the expected haptic vibration level from a haptic vibration level (or the expected vibration level to be output from the haptic module 179) specified to provide a vibration evenly. The electronic device may output the virtual vibration sound adjusted to cause the user to consistently perceive vibration (a specified haptic vibration level) during an event situation through the audio module, and output a vibration corresponding to the expected vibration level through the haptic module concurrently with the output of the adjusted virtual vibration sound.

According to an embodiment, the electronic device may adjust the virtual vibration sound based on both the grip state and the mount state. According to an embodiment, in case that the grip state corresponds to a first grip state (e.g., a state in which the first housing having the haptic module mounted therein is gripped), the electronic device may identify that the first housing having the haptic module mounted therein is in contact with a body surface, and the expected vibration level output from the haptic module may be identified as the intermediate level, such as, the first to third mount shapes 411, 412, and 413 in FIG. 4. As the expected vibration level is identified as the intermediate level according to the mount state, the electronic device may adjust the virtual vibration sound to the intermediate level based on the mount state so as to provide a specified haptic vibration level (e.g., the maximum level) and since the user's perceived vibration does not decrease, the electronic device may further adjust the virtual vibration sound to the minimum level (e.g., level 0) based on the first grip state. When in the first grip state, the electronic device may output the virtual vibration sound adjusted only based on the grip state without further adjusting the virtual vibration sound based on the grip state.

According to an embodiment, when the grip state is the second grip state (e.g., the state in which the second housing is gripped), the electronic device may identify a that the first housing having the haptic module mounted therein is in a floating state (e.g., the fifth grip state 415 or the sixth grip state 416 in FIG. 4) that is not in contact with the body surface, identify an angle between the floor surface (e.g., a gripping body surface) and the first housing, and since an expected vibration level output from the haptic module is identified as different depending on the angle, adjust the virtual vibration sound further based on the angle. For example, when the identified angle is 0 degrees based on the grip state, the electronic device may identify a one-sided contact since the first housing is not in contact with the body surface due to the second holding state. Accordingly, when the identified angle is 0 degrees or more and less than 90 degrees, the expected vibration level to be output from the haptic module depending on the grip state may increase as the angle increases, and the level of the virtual vibration sound may decrease as the angle increases. In the second grip state, since the user's actual perceived vibration level is lower than in the first grip state, the electronic device may adjust the level of the virtual vibration sound to a level identified based on the mount state, and then further adjust the virtual vibration sound by adding the lowered perceived vibration level to the level of the virtual vibration sound adjusted based on the grip state. In the second grip state, even if the virtual vibration sound level adjusted based on the mount state and the vibration of the haptic module are output to provide a specified haptic vibration level, the user may perceive the vibration lower than in the first grip state. Accordingly, the electronic device may further adjust the virtual vibration sound to output more virtual vibration sound by the lowered haptic vibration level so that the user may perceive the specified haptic vibration level. For example, the electronic device may identify the lowered haptic vibration level by identifying the expected haptic vibration level. The expected haptic vibration level may be specified through experiments for each grip position of the electronic device without generating the virtual vibration sound.

According to an embodiment, when configured to perform an operation priorly based on the grip state, the electronic device may adjust the level of the virtual vibration sound using a level identified based on the mount state in a situation where the electronic device is not gripped, and adjust the level of the virtual vibration sound by considering only the grip position regardless of the mount shape in a situation where the electronic device is gripped. In a gripped situation, the electronic device may identify that the electronic device is not in the mount state even if the electronic device comes into contact with a body surface, and identify that the expected vibration level to be output from the haptic module is the same.

According to an embodiment, the electronic device may identify, using at least one sensor, that the electronic device is not in the mount state or the grip state (e.g., located in a bag or pocket), and in this case, may adjust a virtual vibration sound to the specified maximum level. When the electronic device is not in the mount state or the grip state, even if the haptic module 179 generates vibration at the same vibration level, the user's haptic vibration is lowered, and thus the electronic device may identify an expected haptic vibration level as the minimum level, and adjust the virtual vibration sound to the specified maximum level based on the expected haptic vibration level being the minimum level so as to provide a vibration evenly at the specified haptic vibration level. According to another embodiment, when the electronic device identifies that the electronic device is not in the mount or the grip state (e.g., placed in a bag or pocket), the electronic device may process the state as an exception and not perform the method for adjusting the virtual vibration sound.

According to an embodiment, the electronic device may obtain surrounding environment information, identify external noise based on the surrounding environment information, and in case that the surrounding environment is noisy and the external noise is greater than a first reference level, adjust an adjusted virtual vibration sound level to increase to a predetermined level. According to an embodiment, in case that the surrounding environment is quiet and the external noise is lower than a second reference level, the electronic device may adjust the adjusted virtual vibration sound level to decrease to a predetermined level.

According to an embodiment, the electronic device may obtain a distance between the electronic device and the user, for example, by using a short-range communication method, and when the distance between the electronic device and the user is greater than a reference distance and the electronic device is in the mount state, may adjust the adjusted virtual vibration sound level to increase to a preconfigured level. For example, the electronic device may adjust the virtual vibration sound, based on the distance between the electronic device and an external electronic device obtained through short-range communication with the external electronic device (e.g., a wearable device worn by the user) of the user. For example, the electronic device may monitor the surroundings of the electronic device by using at least one sensor (e.g., a LiDAR sensor, a radar sensor, or a proximity sensor) and/or a camera to identify whether the user is in a close location, and may adjust the virtual vibration sound, based on whether the user is in a close location. For example, the electronic device may identify whether the user is in a close location to the mounted electronic device through voice recognition of the user. Without limitation thereto, the electronic device may identify the distance between the mounted electronic device and the user or the proximity of the user through various other methods.

According to an embodiment, an operating method an electronic device (e.g., the electronic device 101 in FIGS. 1, 2A to 2D, and 3) including a first housing (e.g., the first housing 210 in FIGS. 1, 2A to 2D, and 3) and a second housing (e.g., the second housing 220 in FIGS. 1, 2A to 2D, and 3) may include an operation of identifying at least one of a mount state or a grip state of the electronic device, based identifying on an event activating a vibration generated by a haptic module (e.g., the haptic module 179 in FIGS. 1, 2A to 2D, and 3) mounted in the first housing.

According to an embodiment, the method may include an operation of identifying an expected vibration level to be output from the haptic module, based on at least one of the mount state or the grip state.

According to an embodiment, the method may include an operation of adjusting a virtual vibration sound to be output from an audio module (e.g., the audio module 170 in FIGS. 1 and 3) of the electronic device, based on the expected vibration level.

According to an embodiment, the method may further include an operation of outputting the adjusted virtual vibration sound through the audio module, and outputting a vibration corresponding to the expected vibration level through the haptic module concurrently with the output of the adjusted virtual vibration sound.

According to an embodiment, the operation of adjusting the virtual vibration sound may include an operation of adjusting the virtual vibration sound to a level obtained by subtracting the expected vibration level from the specified haptic vibration level, so as to provide a consistent haptic vibration at a specified haptic vibration level in the event situation. According to an embodiment, the haptic module may include a horizontal vibration motor, and the horizontal vibration motor may generate a vibration inversely proportional to a cross-sectional area of the housing of the electronic device in contact with the floor surface.

According to an embodiment, the specified haptic vibration level may be specified as a maximum vibration level output from the haptic module or a vibration level output from the haptic module in the mount state in which the second housing is in contact with the floor surface and the first housing is rotated and floated at a specified angle based on the hinge structure, and the hinge structure may be configured between the first housing and the second housing.

According to an embodiment, the operation of adjusting the virtual vibration sound may include an operation of adjusting a level of the virtual vibration sound to a specified first level, based on the mount state corresponding to a state in which the first housing and the second housing are in contact with the floor surface. According to an embodiment, the first level may be specified as a maximum level, based on the expected vibration level to be output from the haptic module being a minimum level.

According to an embodiment, the operation of adjusting the virtual vibration sound may include an operation of adjusting the virtual vibration sound to a specified second level, based on the mount state corresponding to a state in which the first housing is in contact with the floor surface and the second housing is floated. According to an embodiment, the second level may be specified as a specified intermediate level between a first level corresponding to the maximum level and a third level corresponding to the minimum level, based on the expected vibration level being the intermediate level.

According to an embodiment, the operation of adjusting the virtual vibration sound may include an operation of identifying an angle between the floor surface and the first housing based on the mount state corresponding to a state in which the first housing is floated and the second housing is in contact with the floor surface, and an operation of adjusting the virtual vibration sound based on the identified angle.

According to an embodiment, the operation of adjusting the virtual vibration sound may further include an operation of reducing an intensity of the virtual vibration sound to a specified third level in response to the identified angle increasing to a specified angle. According to an embodiment, the third level may be specified as the minimum level based on the expected vibration level being the maximum level.

According to an embodiment, the operation of adjusting the virtual vibration sound may include an operation of adjusting the virtual vibration sound to a specified first level based on identifying of the identified angle as 0 degrees, and an operation of adjusting the virtual vibration sound to a third level or an operation of not outputting the virtual vibration sound based on identifying of the identified angle as the reference angle.

According to an embodiment, the operation of adjusting the virtual vibration sound may include an operation of adjusting the virtual vibration sound to the specified minimum level based on the grip state corresponding to a state in which the first housing is gripped, an operation of identifying an expected haptic level being lowered based on the grip state corresponding to a state in which the second housing is gripped, and adjusting the virtual vibration sound to the intermediate level greater than the minimum level and lower than the maximum level based on the expected haptic level, and an operation of adjusting the virtual vibration sound to the specified maximum level based on the electronic device not in the mount state or the grip state. According to an embodiment, the intermediate level may be a level obtained by subtracting the expected haptic level from the specified haptic vibration level so as to provide a haptic vibration uniformly at the specified haptic vibration level. According to an embodiment, the haptic vibration level may be specified as the maximum vibration level output from the haptic module.

An embodiment may provide a non-transitory recording medium storing at least one program, wherein the at least one program may include instructions that, when executed by at least one processor (e.g., the processor 120 in FIGS. 1 and 3) of an electronic device (e.g., the electronic device 101 in FIGS. 1, 2A to 2D, and 3) including a first housing (e.g., the first housing 210 in FIGS. 1, 2A to 2D, and 3) and a second housing (e.g., the second housing 220 in FIGS. 1, 2A to 2D, and 3), cause the electronic device to perform an operation of identifying at least one of a mount state or a grip state of the electronic device based on an event activating a vibration generated by a haptic module (e.g., the haptic module 179 in FIGS. 1 and 3) mounted in the first housing being identified, an operation of identifying an expected vibration level to be output from the haptic module based on at least one of the mount state or the grip state, and an operation of adjusting a virtual vibration sound to be output from an audio module (e.g., the audio module 170 in FIGS. 1 and 3) of the electronic device based on the expected vibration level.

According to an embodiment, the electronic device may provide the user with the uniform (or consistent) haptic vibration during the event situation by adjusting the virtual vibration sound based on at least one of the mount state and the grip state, outputting the adjusted virtual vibration sound through the audio module, and concurrently outputting the vibration according to the expected vibration level from the haptic module. In addition, various effects directly or indirectly identified through the disclosure may be provided.

The embodiments disclosed herein are provided merely to easily describe technical details of the disclosure and to help the understanding of the disclosure, and are not intended to limit the scope of various embodiments of the present disclosure. Therefore, it should be construed that all modifications and changes or various other embodiments based on the technical idea of various embodiments of the disclosure fall within the scope of various embodiments of the disclosure.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a housing comprising a first housing (210) and a second housing (220);
a haptic module (179) mounted in the first housing;
an audio module (170);
memory (130); and
at least one processor (120) electrically connected to the haptic module, the audio module, and the memory,
wherein the memory stores instructions, when executed by the at least one processor, causing the electronic device to:
identify at least one of a mount state or a grip state of the electronic device, based on an event activating a vibration generated by the haptic module being identified;
identify an expected vibration level to be output from the haptic module, based on at least one of the mount state or the grip state; and
adjust a virtual vibration sound to be output from the audio module, based on the expected vibration level.

2. The electronic device of claim 1, wherein the memory stores instructions, when executed by the at least one processor, causing the electronic device to:
control the audio module to output the adjusted virtual vibration sound; and
control the haptic module to output a vibration corresponding to the expected vibration level concurrently with the output of the adjusted virtual vibration sound.

3. The electronic device of claim 1 or 2, wherein the memory stores instructions, when executed by the at least one processor, causing the electronic device to adjust the virtual vibration sound to a level obtained by subtracting the expected vibration level from a specified haptic vibration level, so as to provide a consistent haptic vibration at the specified haptic vibration level in the event situation,
wherein the haptic module comprises a horizontal vibration motor,
wherein the horizontal vibration motor is configured to generate a vibration inversely proportional to a cross-sectional area of the housing in contact with a floor surface,
wherein the specified haptic vibration level is configured as a maximum vibration level output from the haptic module or a vibration level output from the haptic module in a mount state in which the second housing is in contact with the floor surface and the first housing is rotated and floated at a specified angle based on the hinge structure, and
wherein the hinge structure is configured between the first housing and the second housing.

4. The electronic device of one of claims 1 to 3, wherein the memory stores instructions, when executed by the at least one processor, causing the electronic device to:
adjust the virtual vibration sound to a specified first level, based on the mount state corresponding to a state in which the first housing and the second housing are in contact with the floor surface; and
adjust the virtual vibration sound to a specified second level, based on the mount state corresponding to a state in which the first housing is in contact with the floor surface and the second housing is floated,
wherein the specified first level is configured as a maximum level, based on the expected vibration level to be output from the haptic module being a minimum level, and
wherein the specified second level is configured as a specified intermediate level between the first level corresponding to the maximum level and a third level corresponding to a minimum level, based on the expected vibration level being the intermediate level.

5. The electronic device of one of claims 1 to 4, wherein the memory stores instructions, when executed by the at least one processor, causing the electronic device to:
identify an angle between the floor surface and the first housing, based on the mount state corresponding to a state in which the first housing is floated and the second housing is in contact with the floor surface;
adjust the virtual vibration sound, based on the identified angle; and
reduce an intensity of the virtual vibration sound to a specified third level in response to the identified angle increasing to a specified angle, and
wherein the third level is configured as the minimum level based on the expected vibration level being a maximum level.

6. The electronic device of one of claims 1 to 5, wherein the memory stores instructions, when executed by the at least one processor, causing the electronic device to:
adjust the virtual vibration sound to a specified first level, based on identifying of the identified angle as 0 degrees; and
adjust the virtual vibration sound to a third level or not output the virtual vibration sound, based on identifying of the identified angle as a reference angle.

7. The electronic device of one of claims 1 to 6, wherein the memory stores instructions, when executed by the at least one processor, causing the electronic device to:
adjust the virtual vibration sound to a specified minimum level, based on the grip state corresponding to a state in which the first housing is gripped;
identify an expected haptic level being lowered, based on the grip state corresponding to a state in which the second housing is gripped and adjust the virtual vibration sound to an intermediate level greater than the minimum level and lower than a maximum level, based on the expected haptic level; and
adjust the virtual vibration sound to the specified maximum level, based on the electronic device not in the mount state or the grip state,
wherein the intermediate level corresponds to a level obtained by subtracting the expected haptic level from a specified haptic vibration level so as to provide a vibration uniformly at the specified haptic vibration level, and
wherein the specified haptic vibration level is specified as a maximum vibration level output from the haptic module.

8. An operating method in an electronic device (101) comprising a first housing (210) and a second housing (220), the method comprising:
identifying at least one of a mount state or a grip state of the electronic device, based on an event activating a vibration generated by a haptic module (179) mounted in the first housing being identified;
identifying an expected vibration level to be output from the haptic module, based on at least one of the mount state or the grip state; and
adjusting a virtual vibration sound to be output from an audio module (170) of the electronic device, based on the expected vibration level.

9. The method of claim 8, further comprising outputting the adjusted virtual vibration sound through the audio module, and outputting a vibration corresponding to the expected vibration level through the haptic module concurrently with the output of the adjusted virtual vibration sound.

10. The method of claim 8 or 10, wherein the adjusting of the virtual vibration sound comprises adjusting the virtual vibration sound to a level obtained by subtracting the expected vibration level from a specified haptic vibration level, so as to provide a consistent haptic vibration at the specified haptic vibration level in the event situation,
wherein the haptic module comprises a horizontal vibration motor,
wherein the horizontal vibration motor is configured to generate a vibration inversely proportional to a cross-sectional area of a housing of the electronic device in contact with a floor surface,
wherein the specified haptic vibration level is specified as a maximum vibration level output from the haptic module or a vibration level output from the haptic module in a mount state in which the second housing is in contact with the floor surface and the first housing is rotated and floated at a specified angle based on the hinge structure, and
wherein the hinge structure is configured between the first housing and the second housing.

11. The method of one of claims 8 to 10, wherein the adjusting of the virtual vibration sound comprises:
adjusting a level of the virtual vibration sound to a specified first level, based on the mount state corresponding to a state in which the first housing and the second housing are in contact with the floor surface; and
adjusting the virtual vibration sound to a specified second level, based on the mount state corresponding to a state in which the first housing is in contact with the floor surface and the second housing is floated,
wherein the first level is specified as a maximum level, based on the expected vibration level to be output from the haptic module being a minimum level, and
wherein the second level is specified as a specified intermediate level between the first level corresponding to the maximum level and a third level corresponding to a minimum level, based on the expected vibration level being the intermediate level.

12. The method of one of claims 8 to 11, wherein the adjusting of the virtual vibration sound comprises:
identifying an angle between the floor surface and the first housing, based on the mount state corresponding to a state in which the first housing is floated and the second housing is in contact with the floor surface;
adjusting the virtual vibration sound, based on the identified angle; and
reducing an intensity of the virtual vibration sound to a specified third level in response to the identified angle increasing to a specified angle, and
wherein the third level is specified as the minimum level based on the expected vibration level being a maximum level.

13. The method of one of claims 8 to 12, wherein the adjusting of the virtual vibration sound comprises:
adjusting the virtual vibration sound to a specified first level, based on identifying of the identified angle as 0 degrees; and
adjusting the virtual vibration sound to a third level or not outputting the virtual vibration sound, based on identifying of the identified angle as a reference angle.

14. The method of one of claims 8 to 13, wherein the adjusting of the virtual vibration sound comprises:
adjusting the virtual vibration sound to a specified minimum level, based on the grip state corresponding to a state in which the first housing is gripped;
identifying an expected haptic level being lowered, based on the grip state corresponding to a state in which the second housing is gripped and adjusting the virtual vibration sound to an intermediate level greater than the minimum level and lower than a maximum level, based on the expected haptic level; and
adjusting the virtual vibration sound to the specified maximum level, based on the electronic device not in the mount state or the grip state,
wherein the intermediate level corresponds to a level obtained by subtracting the expected haptic level from a specified haptic vibration level so as to provide a haptic vibration uniformly at the specified haptic vibration level, and
wherein the haptic vibration level is specified as a maximum vibration level output from the haptic module.

15. A non-transitory computer-readable recording medium storing at least one program, wherein the at least one program comprises instructions that, when executed by at least one processor (120) of an electronic device (101) comprising a first housing (210) and a second housing (220), cause the electronic device to:
identify at least one of a mount state or a grip state of the electronic device, based on an event activating a vibration generated by a haptic module (179) mounted in the first housing being identified;
identify an expected vibration level to be output from the haptic module, based on at least one of the mount state or the grip state; and
adjust a virtual vibration sound to be output from an audio module (170) of the electronic device, based on the expected vibration level.
